# EUROPÄISCHE PATENTSCHRIFT

(11) **EP 0 343 144 B1**
(45) Veröffentlichungstag und Bekanntmachung des Hinweises auf die Patenterteilung: **21.07.1993**
(21) Anmeldenummer: 89890131.9
(22) Anmeldetag: 03.05.1989
(51) Int. Cl.: H01M 10/48, H01M 12/08

(54) **Galvanisches Element und Verfahren zur Bestimmung des gleichmässigen Ladungszustandes**
Galvanic element and method for the determination of a uniform charging condition
Elément galvanique et procédé de détermination de l'état de charge uniforme

(30) Priorität: 16.05.1988 AT 1265/88
(43) Veröffentlichungstag der Anmeldung: 23.11.1989
(73) Patentinhaber: Elin Energieanwendung Gesellschaft m.b.H., A-1140 Wien (AT)
(72) Erfinder: Tomazic, Gerd, Dr. Dipl.-Ing., A-8680 Mürzzuschlag (AT)
(74) Vertreter: Krause, Peter

(56) Entgegenhaltungen:
- EP-B- 0 063 032
- DE-C- 3 438 783

## Beschreibung

Die Erfindung bezieht sich auf ein galvanisches Element, insbesondere wiederaufladbare Zink/Brom-Batterie, und auf ein Verfahren zur Bestimmung des gleichmäßigen Ladungszustandes eines galvanischen Elementes, insbesondere einer wiederaufladbaren Zink/Brom-Batterie.

Die Speicherung von Energie z.B. dynamischer Energie in Schwungrädern, potentieller Energie z.B. durch Stauseen oder chemischer bzw. elektrischer Energie in wiederaufladbaren Batterien hat jeweils ihre artspezifischen Widerstände und Schwierigkeiten. Bei der Speicherung für galvanische Elemente, insbesondere für wiederaufladbare Batterien, liegen die speziellen Schwierigkeiten jeweils in den elektrochemisch wirksamen Systemen, so bestehen einerseits Schwierigkeiten in einem relativ hohen Leistungsgewicht anderseits, insbesondere bei Systemen mit einem umlaufenden Elektrolyten, in einem ungleichmäßigen Aufladungszustand der einzelnen hintereinander geschalteten Zellen. Diese unterschiedlichen Ladungszustände sind bei galvanischen Elementen, die nur eine geringe Lebensdauer aufweisen von geringer Bedeutung. Ist die Lebensdauer jedoch größer, insbesondere wenn eine wiederaufladbare Batterie vorliegt, so besteht die Gefahr, daß durch die einzelnen hintereinander geschalteten Zellen aufgrund der zwangsweise vorliegenden unterschiedlichen Aufladebedingungen und Umlaufbedingungen des Elektrolyten unterschiedliche Aufladungen verursacht werden. Diese unterschiedlichen Aufladungen stellen jedoch gerade bei der Abscheidung von Metallschichten, insbesondere an elektrisch leitfähigen Kunststoffelektroden, z.B. an Elektroden, die aus Polyäthylen aufgebaut sind, die mit Kohlenstoff z.B. Graphit gefüllt sind, eine Störquelle für den normalen Betrieb dar. Wird der abgeschiedene Metallfilm, insbesondere Zinkfilm zu stark bzw. liegt ein zu großes Dentritenwachstum vor, so kommt es zu unvorhersehbaren Betriebsstörungen, wobei teilweise z. B. durch Durchwachsen der Dentriten durch die Diaphragmen irreparable Schäden auftreten. Eine Möglichkeit derartige Schäden zu vermeiden besteht nun darin, daß dem unterschiedlichen Schichtstärkenwachstum der Metallschichten auf den Elektroden dadurch Rechnung getragen wird, daß nach einer bestimmten Anzahl von Betriebsstunden bzw. Zyklen eine Totalauflösung der abgeschiedenen Metallschichte durchgeführt wird. Durch diesen Vorgang kommt es de facto zu einer vollkommenen Regenerierung der Oberfläche der Elektroden. Neben diesen vielschichtigen Problemen besteht auch noch die Schwierigkeit bei galvanischen Zellen mit umlaufenden Elektrolyten, daß durch das Flüssigkeitssystem der Elektrolyten vagabundierende Ströme zwischen den einzelnen Zellen auftreten, die zur Kapazitätsminderung, insbesondere über längere Zeiträume beitragen. Diese Kapazitätsminderung kann nun durch entgegengerichtete Spannungen, die somit ein Fließen der vagabundierenden Ströme verhindern, teilweise kompensiert werden, wobei naturgemäß durch die Kompensationsströme auch Energie verbraucht wird. Diese Kompensationsströme können ebenfalls durch das galvanische Element z.B. Zink/Brom -Batterie aufgebracht werden. Diese Kompensationsströme können z.B. durch einen unter Gegenspannung liegenden elektrischen Leiter, der in Form eines sich verjüngenden und expandierenden Kanales zwischen den einzelnen z.B. Zuleitungen oder Ableitungen zu den Elektrolyträumen verbindenden Kanals dargestellt sein.

Die Erfindung hat sich zur Aufgabe gestellt, ein galvanisches Element zu schaffen, das es erlaubt, einen ungleichmäßigen Ladungszustand der einzelnen Zellen zu indizieren, wobei eine besonders hohe Störungsfreiheit durch Anwendung von einfachsten Meßprinzipien gewährleistet sein soll.

Das erfindungsgemäße Verfahren hat sich zur Aufgabe gestellt, auf besonders einfache Art und Weise einen unterschiedlichen Ladungszustand in den einzelnen Zellen eines galvanischen Elementes zu indizieren.

Das erfindungsgemäße galvanische Element, insbesondere wiederaufladbare Zink/Brom-Batterie mit einer Vielzahl von insbesondere bipolaren Elektroden, wobei die einzelnen Katholyt- bzw . Anolyträume, welche mit Diaphragmen voneinander getrennt sind und Zu- und Ableitungen für die umlaufenden Elektrolyten aufweisen und die jeweiligen elektrischen Endelektroden elektrische Ableitungen aufweisen, die Zu- und/oder Ableitungen die jeweils untereinander über Sammelleitungen verbunden sind, besteht im wesentlichen darin, daß eine Spannungsvergleichsschaltung zwischen zwei Elektroden, wobei zumindest im Bereich einer elektrischen Ableitung, insbesonders der Anode des galvanischen Elementes, vorgesehen ist. Im Laufe des Betriebes eines galvanischen Elementes hat es sich herausgestellt, daß es zu unterschiedlichen metallischen Abscheidungen, insbesondere von Zink an den Elektroden kommt. Diese Abscheidungen sind auch abhängig von dem Ladungszustand in den einzelnen Elektrodenräumen. Durch den unterschiedlichen Ladungszustand kommt es zur Ablösung von einzelnen Metallschichten, insbesondere von Zinkschichten an den einzelnen Elektroden, die Störungen, z.B. bei der Elektrolytzufuhr bedingen. Durch das einfache Vorsehen einer Spannungsvergleichsschaltung kann mit einer einfachen Messung der Spannung, z.B. in zeitlicher Aufeinanderfolge ein Unterschied in der Beladung der elektrochemischen Zellen, also beispielsweise einer unterschiedlichen Schichtdicke der Metallschichte leicht bestimmt werden. Ist der Unterschied der Metallschichtdicke zu groß, so besteht die Gefahr einer unregelmäßigen Betriebsweise der galvanischen Zelle, sodaß ein zusätzliches Eingreifen zu dem Normalbetrieb erforderlich ist.

Ist die Spannungsvergleichsschaltung zwischen jeweils einer Elektrode im Bereich der elektrischen Ableitung und vorzugsweise einer im Bereich zwischen diesen, insbesondere mittigen Elektrode vorgesehen, so kann eine besonders genaue und auch einfache Bestimmung des unterschiedlichen Ladungszustandes der Zellen erfolgen. Ist die Spannungsvergleichsschaltung mit einer weiteren Spannungsquelle versehen, gegen die die abgegriffene Spannung vergleichbar ist, so können Störungen besonders einfach kompensiert werden.

Eine besonders genaue Spannungsvergleichsschaltung ergibt sich dann, wenn die weitere Spannungsquelle eine Normalspannungsquelle darstellt.

Ist die weitere Spannungsquelle durch das galvanische Element selbst gebildet, so kann ein besonders geringer apparativer Aufwand gewährleistet sein, wobei gleichzeitig eine hinreichende Genauigkeit gewährleistet ist.

Das erfindungsgemäße Verfahren zur Bestimmung des gleichmäßigen Ladungszustandes eines galvanischen Elementes, insbesondere einer wiederaufladbaren Zink/Brom-Batterie mit einer Vielzahl von, insbesondere bipolaren, Elektroden, wobei die jeweiligen Endelektroden zur Stromauf- und Abnahme dienen und durch die einzelnen Anolyt- und Katholyträume, welche mit Diaphragma voneinander getrennt sind und über Zu- und Ableitungen Elektrolytflüssigkeiten durchgeleitet werden, wobei die einzelnen Zu- und/oder Ableitungen zu Sammelleitungen führen, besteht im wesentlichen darin, daß die elektrische Spannung zwischen einer Elektrode im Bereich zumindest einer Endelektrode, insbesondere dieser, und zumindest einer Elektrode zwischen den beiden Endelektroden abgegriffen wird und diese Spannung mit einer weiteren verglichen wird und bei Ungleichheit, insbesondere bei Unterspannung um etwa einer Halbspannung einer Zelle ein elektrischer Kontakt, z.B. Schalter betätigt, z.B. geschlossen wird. Durch diese Vorgangsweise wird erreicht, daß durch eine einfache Spannungsmessung außerhalb der Elektrolyträume der unterschiedliche Ladungszustand der einzelnen Zellen integral gemessen werden kann, sodaß entsprechende Gegenmaßnahmen gesetzt werden können.

Werden die Spannungen, welche zwischen den jeweiligen Endelektroden und der bzw. den mittigen Elektroden abgegriffen werden verglichen, so kann eine integrale Messung von zwei Teilen des galvanischen Elementes durchgeführt werden, sodaß zufällige geometrische Ungleichheiten auf einfache Art und Weise ausgeglichen werden.

Wird bei betätigtem Kontakt ein optisches und/oder akustisches Signal eingeschaltet, so kann die Überprüfung bzw. Regenerierung der Batterie zu einem vom humanen Bedienungsorgan zu bestimmenden Zeitpunkt optimiert werden.

Werden bei betätigtem elektrischen Kontakt nach Beendigung der Stromentnahme und vor dem Aufladevorgang die gesamten Metallfilme auf den Elektroden aufgelöst, so kommt es zu einer vollkommenen Regenerierung der Elektroden, wobei gleichzeitig die Ionenaktivität des Katholyten und des Anolyten im wesentlichen auf den Ausgangszustand gebracht wird.

Werden nach getätigtem elektrischen Kontakt in den Katholyträumen der Elektrolyt mit oxidierten Anionen umgepumpt, so kommt es zu einer verläßlichen vollständigen Auflösung der metallischen Abscheidungen, die unabhängig von den elektrochemischen Vorgängen auf rein chemischen Mechanismus bedingt sind, wobei auch von der Elektrode abgelöste Metallschichten, die somit nicht mehr stromleitend mit der Elektrode verbunden sind, zur Auflösung gebracht werden können.

Im folgenden wird die Erfindung anhand der Zeichnungen näher erläutert.

Es zeigen Fig. 1 in schematischer Darstellung eine wiederaufladbare Zink/Brom-Batterie, Fig. 2 die Zuführung des Elektrolyten und Fig. 3 einen Schaltplan zur Spannungskompensationsmessung.

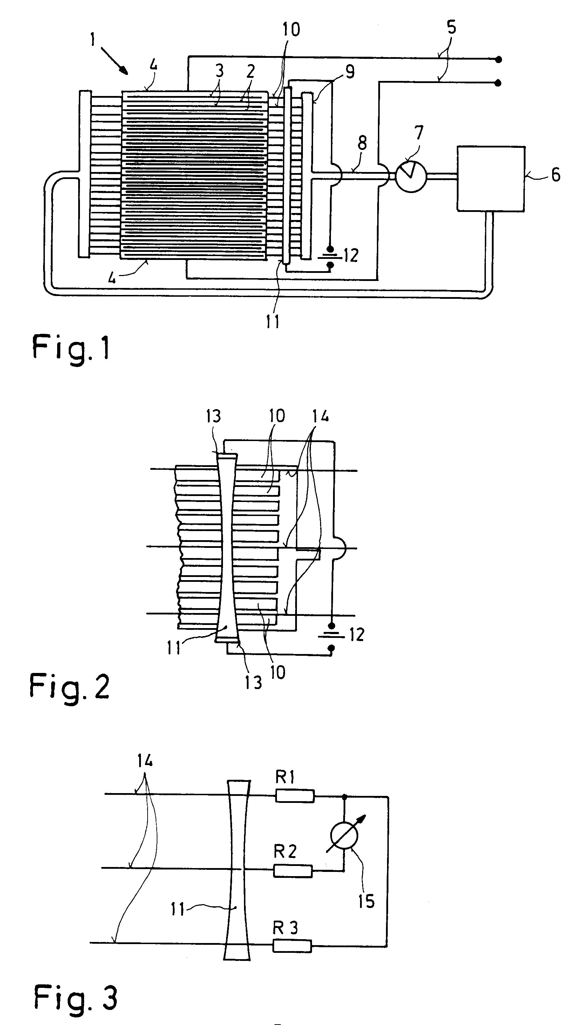

Das in Fig. 1 dargestellte Zellenpaket 1 weist eine Vielzahl von Elektroden 2 auf, die voneinander durch Diaphragmen 3 getrennt sind. An den beiden Enden des Zellenpaketes 1 sind Endelektroden 4 mit elektrischen Ableitungen 5 vorgesehen. Obwohl jede Zink/Brom-Batterie ein doppeltes Umlaufsystem und zwar sowohl für den Anolyten, als auch den Katholyten aufweist, ist im vorliegenden Fall zur Vereinfachung lediglich der Katholytkreislauf dargestellt. Der Elektrolyt wird aus dem Behälter 6 über die Pumpe 7 Leitung 8, die in einen Sammelleiter 9 mündet, geleitet. Von dem Sammelleiter 9 zweigen eine Vielzahl von Zuleitungen 10 in die einzelnen Elektrodenräume ab. Da zwangsweise der Elektrolyt stromleitend ist, fließen auch Ströme aus den einzelnen Zellen durch den Elektrolyten. Zur Kompensation dieser vagabundierenden Ströme ist ein elektrischer Leiter 11 vorgesehen, der an eine Spannungsquelle 12 angelegt ist. Dieser elektrische Leiter kann, wie in Fig. 2 dargestellt durch eine Flüssigkeitsleitung die sich bis zur Mitte verjüngt und sodann wieder expandiert, gebildet sein. An den beiden Enden des Flüssigkeitsleiters sind eigene Elektroden 13 angeordnet, die mit der Spannungsquelle 12 verbunden sind. In den einzelnen ZuLeitungen 10 sind elektrische Leitungen 14 zu den nicht dargestellten Elektroden vorgesehen, die zur Abnahme der zwischen den Elektroden herrschenden Spannung dienen.

Wie aus Fig. 3 ersichtlich, kann eine sog. Poggendorf'sche Kompensationsschaltung zur Messung der Spannung bzw. der Spannungsdifferenz vorgesehen werden. Die Widerstände R 1, R 2 und R 3 dienen dazu, die Stromentnahme so gering wie möglich zu halten, um eine Störung des Systems durch den Meßvorgang möglichst gering zu halten. Anstelle der Poggendorf'schen Kompensationsschaltung kann auch jede andere geeignete Meßvorrichtung verwendet werden. Die Stromquelle 12, welche gleichzeitig zur Abgabe der kompensierenden Ströme dient, kann entweder durch das galvanische Element selbst dargestellt sein oder durch eine Fremdstromquelle, insbesondere durch eine Fremdstromquelle mit definierter Normalspannung, gebildet sein.

Der Elektrolyt weist einen Komplexbildner und Zinkbromid auf, wobei gegebenenfalls Leitsalze ebenfalls noch anwesend sind. Der Komplexbildner sorgt dafür, daß abgeschiedenes Brom aus der wässrigen Phase abgeschieden wird, sodaß im geladenen Zustand Brom lediglich durch das Lösungsgleichgewicht zwischen Komplex und der wässrigen Phase in der wässrigen Phase vorliegt. Nach einer bestimmten Anzahl von Lade- und Entladezyklen tritt, insbesondere im Kathodenbereich der Batterie eine größere Schichtdicke des abgeschiedenen Zinkfilms auf. Nach 20 Lade- und Entladevorgängen betrug die Spannungsdifferenz gegen Ende der Entladung 0,4 Volt und nach 40 Lade- und Entladevorgängen 0,75 Volt. Unter Spannungsdifferenz ist der Unterschied der Spannung zwischen einer Endelektrode und einer mittleren Spannungsableitung gemäß Fig. 3 und der anderen Endelektrode und der mittleren Ableitung zu verstehen. Mit größerer Anzahl der Zyklen treten also größere Spannungsunterschiede auf. Bei einem bestimmten vorgegebenen Unterschied im Spannungsverlauf wird sodann für eine totale Entladung der Batterie gesorgt, die beispielsweise auf elektrischem Wege erfolgen kann oder und diese Vorgangsweise ist besonders bevorzugt, es kann eine chemische Auflösung des Zinkfilms dadurch erfolgen, daß der Elektrolyt, welcher freies Brom aufweist, durch die Räume gepumpt wird, welcher den Zinkfilm aufweist. Auf diese Art und Weise wird für die Auflösung des Zinkfilms Sorge getragen, wobei gleichzeitig eine Kühlung der Batterie durch den umgepumpten Elektrolyten erfolgt, sodaß keine thermische Belastung der beispielsweise aus graphitgefülltem Kunststoff bestehenden Elektroden und der aus Kunststoff z.B. Polyäthylen oder Polypropylen bestehenden Diaphragmen bewirkt wird. Ist eine Automatisierung unerwünscht, so kann an Stelle des Meßgerätes 15 auch ein optischer Signalgeber, beispielsweise eine Glimmlampe, die bei Überschreitung einer bestimmten Spannung anspricht oder auch ein akustischer Signalgeber vorgesehen werden.

Ist eine Automatisierung erwünscht, so soll um einen störungsfreien Betrieb zu gewährleisten erst nach Beendigung der Stromentnahme aus der Batterie und vor dem Wiederaufladevorgang eine entsprechende Regenerierung der Batterie durchgeführt werden.

Der Vergleich der Spannung kann auch über eine, z.B. am Anfang der Lade- und Entladezyklen gemessenen Spannung zwischen zwei Elektroden und der aktuellen Spannung erfolgen.

## Patentansprüche

1. Galvanisches Element, insbesondere wiederaufladbare Zink/Brom-Batterie, mit einer Vielzahl von, insbesondere bipolaren, Elektroden (2), wobei die einzelnen Katholyt- bzw. Anolyträume, welche mit Diaphragmen (3) voneinander getrennt sind, Zu- und Ableitungen (10) für die umlaufenden Elektrolyten aufweisen und die jeweiligen Endelektroden (4) elektrische Ableitungen (5) aufweisen und die Zu- und/oder Ableitungen (10) jeweils untereinander über Sammelleitungen (9) verbunden sind, dadurch gekennzeichnet, daß eine Spannungsvergleichsschaltung für die Spannung zwischen zwei Elektroden, wobei zumindest eine im Bereich einer elektrischen Ableitung, insbesondere die Anode der Batterie ist, vorgesehen ist.

2. Galvanisches Element nach Anspruch 1, dadurch gekennzeichnet, daß die Spannungsvergleichsschaltung zwischen jeweils einer Elektrode im Bereich der elektrischen Ableitung und vorzugsweise einer im Bereich zwischen diesen, insbesondere mittigen Elektrode, vorgesehen ist.

3. Galvanisches Element nach Anspruch 1 oder 2, dadurch gekennzeichnet, daß die Spannungsvergleichsschaltung eine weitere Spannungsquelle aufweist, gegen welche die abgegriffene Spannung vergleichbar ist.

4. Galvanisches Element nach Anspruch 3, dadurch gekennzeichnet, daß die weitere Spannungsquelle eine Normspannungsquelle ist.

5. Galvanisches Element nach Anspruch 3, dadurch gekennzeichnet, daß die weitere Spannungsquelle durch das galvanische Element selbst gebildet ist.

6. Verfahren zur Bestimmung des gleichmäßigen Ladungszustandes eines galvanischen Elementes, insbesondere einer wiederaufladbaren Zink/Brom-Batterie, mit einer Vielzahl von, insbesondere bipolaren, Elektroden, und die jeweiligen Endelektroden zur Stromauf- und Stromabnahme dienen, wobei durch die einzelnen Anolyt- und Katholyträume, welche mit Diaphragmen voneinander getrennt sind, über Zu- und Ableitungen Elektrolytflüssigkeiten durchgeleitet werden, wobei die einzelnen Zu- und/oder Ableitungen zu Sammelleitungen führen, dadurch gekennzeichnet, daß die elektrische Spannung zwischen einer Elektrode im Bereich zumindest einer Endelektrode, insbesondere dieser, und zumindest einer Elektrode zwischen den beiden Endelektroden abgegriffen wird und diese Spannung mit einer weiteren verglichen wird und bei Ungleichheit, insbesondere bei Unterspannung um in etwa einer Halbspannung einer Zelle ein elektrischer Kontakt, z.B. Schalter, betätigt, insbesondere geschlossen wird.

7. Verfahren nach Anspruch 6, dadurch gekennzeichnet, daß die Spannungen, welche zwischen den jeweiligen Endelektroden und der, bzw. den mittigen Elektroden abgegriffen werden, verglichen wird.

8. Verfahren nach Ansprüche 6 oder 7, dadurch gekennzeichnet, daß bei betätigtem Kontakt ein optisches und/oder akustisches Signal betätigt wird.

9. Verfahren nach Ansprüche 6, 7 oder 8, dadurch gekennzeichnet, daß bei betätigtem elektrischen Kontakt nach Beendigung der Stromentnahme und vor dem Aufladevorgang die gesamten Metallfilme auf den Elektroden aufgelöst werden.

10. Verfahren nach Anspruch 9, dadurch gekennzeichnet, daß in den Katolyträumen der Elektrolyt mit oxidierten Anionen umgepumpt wird.

## Claims

1. A galvanic element, especially a rechargeable zinc/bromine battery, having a plurality of electrodes, especially bipolar electrodes (2), whilst the individual catholyte and anolyte spaces which are separated from one another by diagrams (3) exhibit inlets and outlets (10) for the circulating electrolytes and the respective end electrodes (4) exhibit electrical outlets (5) and the inlets and/or outlets (10) are in each case connected together via collectors (9), characterized in that a voltage comparator circuit is provided for the voltage between two electrodes, at least one being in the region of one electrical outlet, especially the anode of the battery.

2. A galvanic element as in Claim 1, characterized in that the voltage comparator circuit is provided between any one electrode in the region of the electrical outlet and preferably one in the region between them, especially a central electrode.

3. A galvanic element as in Claim 1 or 2, characterized in that the voltage comparator circuit exhibits a further source of voltage with which the voltage tapped off may be compared.

4. A galvanic element as in Claim 3, characterized in that the further source of voltage is a standard source of voltage.

5. A galvanic element as in Claim 3, characterized in that the further source of voltage is formed by the galvanic element itself.

6. A method of determination of the uniform state of charge of a galvanic element, especially a rechargeable zinc/bromine battery, having a plurality of electrodes, especially bipolar electrodes, and the respective end electrodes serve for receiving and taking off current, whilst through the individual anolyte and catholyte spaces which are separated from one another by diaphragms liquid electrolytes are led via inlets and outlets, the individual inlets and/or outlets leading to collectors, characterized in that the electric voltage is tapped off between an electrode in the region of at least one end electrode, especially the latter, and at least one electrode between the two end electrodes, and this voltage is compared with another voltage and in the case of inequality, especially in the case of the voltage being lower by, say, half the voltage of one cell, an electrical contact, e.g., a switch is actuated, especially closed.

7. A method as in Claim 6, characterized in that the voltages are compared which are tapped off between the respective end electrodes and the central electrode or electrodes.

8. A method as in Claim 6 or 7, characterized in that upon the contact being actuated an optical and/or acoustic signal is actuated.

9. A method as in Claim 6, 7 or 8, characterized in that upon the electrical contact being actuated, after termination of the consumption of current and before the charging process the whole of the films of metal upon the electrodes are dissolved.

10. A method as in Claim 9, characterized in that in the catholyte spaces the electrolyte is pumped round with oxidized anions.

## Revendications

1. Elément galvanique, en particulier batterie rechargeable au zinc/brome, comportant une pluralité d'électrodes (2), notamment bi-polaires, les différentes chambres à catholyte et à anolyte, qui sont séparées les unes des autres par des cloisons (3), comportant des entrées et des sorties (10) pour la circulation de l'électrolyte, les électrodes d'extrémité (4) présentant des départs (5) électriques et les entrées et/ou les sorties (10) étant connectées entre elles par des collecteurs (9), caractérisé par le fait qu'il est prévu un circuit de comparaison de tension pour la tension entre deux électrodes, l'une des électrodes au moins étant située dans la région d'un départ électrique, notamment l'anode de la batterie.

2. Elément galvanique selon la revendication 1, caractérisé par le fait que le circuit de comparaison de tension est prévu entre respectivement une électrode dans la région des départs électriques et de préférence une électrode dans la région entre celles-ci, notamment une électrode médiane.

3. Elément galvanique selon la revendication 1 ou 2, caractérisé par le fait que le circuit de comparaison de tension présente une source de tension supplémentaire avec laquelle on peut comparer la tension prélevée.

4. Elément galvanique selon la revendication 3, caractérisé par le fait que la source de tension supplémentaire est une source de tension normalisée.

5. Elément galvanique selon la revendication 3, caractérisé par le fait que la source de tension supplémentaire est constituée par l'élément galvanique lui-même.

6. Procédé de détermination de la charge régulière d'un élément galvanique, en particulier d'une batterie rechargeable au zinc/brome, comportant une pluralité d'électrodes, notamment bipolaires, et dans lequel les électrodes d'extrémité concernées servent à l'arrivée et au départ du courant, des électrolytes liquides étant mis en circulation par l'intermédiaire de conduites d'entrée et de sortie, dans les différentes chambres à catholyte et à anolyte qui sont séparées les unes des autres par des cloisons, les différentes conduites d'entrée et/ou de sortie débouchant dans des collecteurs, caractérisé par le fait que l'on prélève la tension électrique entre une électrode située dans la région d'au moins une électrode d'extrémité, plus particulièrement celle-ci, et au moins une électrode entre les deux électrodes d'extrémité, on compare cette tension à une autre et, en cas d'inégalité, notamment en cas de tension de l'ordre de la moitié de celle d'un élément, on actionne, en particulier on ferme, un contact électrique tel que par exemple un commutateur.

7. Procédé selon la revendication 6, caractérisé par le fait que l'on compare les tensions prélevées entre les électrodes terminales et la ou les électrode(s) intermédiaire(s).

8. Procédé selon la revendication 6 ou 7, caractérisé par le fait qu'un signal optique et/ou acoustique est déclenché lorsque le contact est actionné.

9. Procédé selon la revendication 6 ou 7, caractérisé par le fait que l'ensemble des couches métalliques sont dissoutes lorsque le contact est actionné à la fin de la prise de courant et avant le processus de charge.

10. Procédé selon la revendication 9, caractérisé par le fait que l'on fait circuler l'électrolyte avec des anions oxydés dans les chambre à catholyte.
